# FASCICULE DE BREVET EUROPEEN

(11) **EP 1 071 526 B1**
(45) Date de publication et mention de la délivrance du brevet: **05.06.2002**
(21) Numéro de dépôt: 99911894.6
(22) Date de dépôt: 07.04.1999
(51) Int. Cl.: B21C 37/20

(54) **PROCEDE DE FABRICATION DE PIECE TUBULAIRE METALLIQUE ET D'ARBRE TUBULAIRE COMPOSITE**
VERFAHREN ZUM HERSTELLEN EINER METALLISCHEN ROHRABSCHNITT UND VERBUNDROHRACHSENSTRUKTUR
METHOD FOR MAKING A TUBULAR METAL PART AND COMPOSITE TUBULAR SHAFT

(30) Priorité: 14.04.1998 FR 9804886
(43) Date de publication de la demande: 31.01.2001
(73) Titulaire: VALLOUREC COMPOSANTS AUTOMOBILES VITRY, 51301 Vitry-le-Francois (FR)
(72) Inventeur: VALIN, Daniel, F-51300 Saint-Amand-sur-Fion (FR)
(74) Mandataire: Desolneux, Jean-Paul Charles
(86) Numéro de dépôt international: FR9900803
(87) Numéro de publication internationale: WO9952373

(56) Documents cités:
- EP-A- 0 324 499
- EP-A- 0 663 248
- DE-C- 3 133 804
- US-A- 5 428 894

## Description

La présente invention concerne un procédé de fabrication de pièces tubulaires métalliques de forme générale cylindrique ainsi que l'utilisation du procédé pour réaliser des arbres tubulaires composites constitués d'une pièce tubulaire et de pièces rapportées solidarisées à ladite pièce tubulaire. La présente invention concerne aussi des pièces tubulaires aptes à l'emmanchement serrant de pièces rapportées.

On entend par forme cylindrique dans le présent document non seulement toute forme essentiellement délimitée par un cylindre mais également toute forme essentiellement délimitée par une série en gradins de cylindres coaxiaux.

On sait que les pièces tubulaires métalliques cylindriques peuvent notamment constituer des arbres mécaniques légers mais résistants aux sollicitations de flexion rotative et de torsion.

Sur de telles pièces tubulaires, il peut être nécessaire de rapporter et de solidariser d'autres pièces telles que, par exemple, des paliers, des roulements, des roues dentées, des cames, cette liste n'étant pas limitative, les pièces ainsi qualifiées de "rapportées" dans la suite du présent document étant, par exemple, emmanchées à force ou serties sur lesdites pièces tubulaires par un trou axial que les pièces rapportées comportent.

On appellera dans la suite du présent document arbre tubulaire composite l'arbre constitué d'une pièce tubulaire métallique et de pièces rapportées métalliques ou non solidarisées à celui-ci.

Un des intérêts de tels arbres tubulaires composites réside notamment dans le fait de pouvoir choisir indépendamment le matériau de l'arbre et celui des pièces rapportées de manière à optimiser les caractéristiques de chacun de ces composants. On peut ainsi par exemple avoir besoin d'un matériau très dur au niveau des pièces rapportées et d'un métal tenace au niveau de la pièce tubulaire.

Un autre intérêt d'un tel arbre tubulaire composite est son faible coût de fabrication par rapport à celui d'une pièce monobloc capable des mêmes performances: par exemple, la pièce tubulaire peut être en acier de construction mécanique alors que les pièces rapportées sont en acier beaucoup plus allié et difficile à mettre en forme et peuvent, par exemple, être commodément obtenues par métallurgie des poudres.

Encore faut-il que les zones d'emmanchement ou de sertissage ne créent pas de zones faibles vis-à-vis des sollicitations en service et que l'emmanchement permette d'immobiliser avec précision les pièces rapportées tant axialement qu'en rotation ; il serait, par exemple, inconcevable que les cames d'un arbre à cames composite se décalent angulairement en service.

La demande internationale WO 94/01658 décrit un arbre à cames composite pour moteur à combustion interne répondant aux exigences ci-dessus décrites et un procédé de fabrication pour l'obtenir.

Ce procédé consiste à former à partir d'un tronçon de tube des parties annulaires rétreintes aux emplacements axiaux désirés, par exemple par martelage, à enfiler ensuite les cames en les positionnant au droit des rétreints annulaires et enfin à passer un mandrin à l'intérieur du tube pour dilater les parties rétreintes qui viennent alors sertir les cames.

Mais un tel procédé, dans son concept général, impose, pour pouvoir sertir les cames, de dilater non seulement les parties rétreintes mais aussi quelque peu l'ensemble du tube. Il en résulte, d'une part des efforts importants à mettre en oeuvre et d'autre part une certaine sous-épaisseur du tube dans les zones de sertissage.

Aussi le même document prévoit-il d'usiner l'extérieur du tube entre la réalisation des rétreints et l'enfilage des cames pour amener le diamètre extérieur du corps du tube au niveau de celui des parties rétreintes. Mais une telle opération grève notablement le coût du procédé qui nécessite en plus de la perte de métal trois postes de travail différents: réalisation du rétreint, usinage, mandrinage.

Le brevet US 5,428,894 décrit un procédé assez voisin sauf que l'on forme par roulage sur le tube non pas des zones annulaires rétreintes mais des séries de protubérances intérieures espacées circonférentiellement, l'enfilage des cames avec ou sans usinage préalable de l'extérieur du tube et le sertissage par passage de mandrin étant réalisés comme dans le document précédent.

La réalisation de telles protubérances intérieures conduit vraisemblablement à réduire les efforts au sertissage mais ne diminue pas les coûts de fabrication dus au nombre de postes de travail.

La demande de brevet EP 663248 A1 décrit un procédé de fabrication d'arbres à cames permettant de réaliser des surépaisseurs annulaires à diamètre extérieur constant à l'aide d'un mandrin à 2 étages cylindriques rétractable axialement, et une pièce tubulaire selon le préambule de la revendication 21.

Ce dernier procédé permet de se passer de l'opération d'usinage mais la durée de réalisation de la pièce est notablement allongée puisque la réalisation de chaque surépaisseur nécessite une séquence d'opérations et qu'il faut réaliser les surépaisseurs annulaires l'une après l'autre.

On a cherché par la présente invention à concevoir un procédé de fabrication de pièces tubulaires en métal de forme cylindrique destinées, notamment, à réaliser des arbres tubulaires composites à l'aide d'opérations de mise en forme en nombre limité, susceptibles d'être effectuées sur un même équipement.

On a aussi cherché à ce que le procédé de fabrication de pièces tubulaires selon l'invention soit rapide et donc productif, mis en oeuvre avec un minimum d'outillage et ne conduise pas à des pertes de métal.

On a en outre cherché à minimiser dans le procédé selon l'invention les efforts durant les étapes de mise en forme des pièces tubulaires et/ou de solidarisation des pièces rapportées.

On a aussi cherché à ce que les opérations de mise en forme des pièces tubulaires ne conduisent pas à des fissures ou des ruptures tant lors de la fabrication des pièces tubulaires ou des arbres tubulaires composites qu'en service pour ces derniers.

On a aussi cherché à pouvoir solidariser sur les pièces tubulaires un nombre indifférent de pièces rapportées, sans que la longueur axiale de celles-ci ne présente un caractère critique.

On a aussi cherché à ce que les pièces rapportées soient immobilisées axialement et également à ce qu'un verrouillage mécanique empêche toute rotation des pièces rapportées par rapport à la pièce tubulaire, une fois la solidarisation effectuée.

On a aussi cherché à obtenir des pièces tubulaires à gradins cylindriques coaxiaux.

Le procédé de fabrication, selon l'invention, de pièces tubulaires métalliques de forme cylindrique est défini dans la revendication 1 et consiste à soumettre une ébauche tubulaire cylindrique de révolution aux opérations suivantes de déformation plastique:

Dans une première étape, on insère dans l'ébauche un mandrin de forme générale cylindrique de révolution présentant un faible jeu radial par rapport au diamètre intérieur de l'ébauche. Ce mandrin cylindrique comporte sur une fraction seulement de sa longueur une ou plusieurs rainures dont l'axe a une orientation donnée par rapport à l'axe du mandrin.

Dans une deuxième étape, on fait passer axialement l'équipage ébauche-mandrin dans au moins une filière de section circulaire et de diamètre inférieur au diamètre extérieur de l'ébauche de manière à ce que le métal de l'ébauche s'écoule annulairement entre la section de passage de la filière et le mandrin en remplissant les rainures du mandrin et en s'y imprimant en relief, ledit mandrin étant maintenu immobile par rapport à l'extrémité de l'ébauche où est commencée la déformation.

L'extrémité de l'ébauche ou du mandrin où est commencée la déformation de l'ébauche est appelée « extrémité avant » dans la suite du présent document.

Le passage de l'équipage ébauche-mandrin dans la ou les filières peut être réalisé en poussant ledit équipage dans la ou les filières, ce qui correspond à une opération de filage ou d'extrusion, en tirant ledit équipage dans la ou les filières, ce qui correspond à une opération d'étirage, en déplaçant axialement la ou les filières le long de l'équipage maintenu immobile ou par toute opération équivalente. Dans la suite du présent document, le terme « passage dans une filière » recouvre toutes ces options.

Le passage de l'équipage ébauche-mandrin dans la ou les filières correspond dans le présent document, selon le cas, soit à un passage de bout en bout de l'ébauche si l'on désire mettre celle-ci en forme sur toute sa longueur, soit à un passage d'une partie seulement de l'ébauche si l'on ne désire la mettre en forme que sur cette partie.

Dans une troisième étape, on extrait axialement le mandrin de l'ébauche déformée de manière à ce que les parties non rainurées du mandrin adjacentes axialement aux parties rainurées montent sur les zones de l'ébauche déformée imprimées en relief lors de la deuxième étape en réalisant un gonflement de la surface extérieure de ladite ébauche déformée au niveau desdites zones imprimées en relief.

La deuxième et la troisième étape du procédé selon l'invention peuvent être réalisées à froid ou, si nécessaire, à une température plus élevée à laquelle la restauration ou la recristallisation du métal sont facilitées.

Préférentiellement, pour immobiliser le mandrin par rapport à l'extrémité avant de l'ébauche lors de la deuxième étape, on utilise une ébauche sur laquelle a été constituée une butée intérieure en repoussant vers l'axe le métal de ladite extrémité avant et on maintient durant la deuxième étape le mandrin en appui axial contre la butée.

Optionnellement, pour réaliser selon l'invention une pièce tubulaire dont la surface extérieure présente une série de parties cylindriques coaxiales en gradins, on peut utiliser une ébauche qui comporte elle-même extérieurement une série de parties cylindriques coaxiales en gradins, les parties de plus faible diamètre étant situées à l'avant de l'ébauche, et mettre en oeuvre durant la deuxième étape dudit procédé plusieurs filières de diamètres différents travaillant des parties différentes de l'ébauche, au moins une des filières effectuant le remplissage des rainures du mandrin.

L'intérêt d'utiliser une telle ébauche à gradins extérieurs est de limiter les déformations plastiques lors de la deuxième étape du procédé selon l'invention.

Optionnellement encore, pour réaliser selon l'invention une pièce tubulaire dont la surface intérieure présente une série de parties cylindriques coaxiales en gradins, on peut utiliser une ébauche qui comporte elle-même intérieurement une série de parties cylindriques coaxiales en gradins, les parties de plus faible diamètre étant situées à l'avant de l'ébauche, et un mandrin comportant plusieurs parties cylindriques coaxiales en gradins dont le diamètre va en augmentant depuis son extrémité avant jusqu'à son extrémité arrière, les rainures étant disposées sur une ou sur plusieurs des parties cylindriques dudit mandrin.

L'intérêt d'utiliser une telle ébauche à gradins intérieurs est de limiter les déformations plastiques lors de la deuxième étape du procédé selon l'invention.

On peut aussi combiner ces deux options pour réaliser selon l'invention une pièce tubulaire à gradins cylindriques extérieurs et intérieurs. Les gradins cylindriques extérieurs sont alors positionnés sur l'ébauche de manière à correspondre aux gradins cylindriques intérieurs et la zone de travail des filières est adaptée pour générer sur la pièce tubulaire des gradins cylindriques extérieurs correspondant aux gradins cylindriques intérieurs.

Avec ou sans ces options, la seconde étape du procédé selon l'invention est préférentiellement réalisée par filage à froid.

Selon un premier mode particulier de mise en oeuvre du procédé selon l'invention, les rainures sont orientées longitudinalement sur le mandrin.

Selon un second mode particulier de mise en oeuvre du procédé selon l'invention, les rainures sont orientées transversalement sur le mandrin et ont donc une disposition annulaire. Elles permettent d'obtenir après la troisième étape dudit procédé une pièce tubulaire gonflée présentant extérieurement des zones annulaires en relief.

Selon ce second mode de mise en oeuvre du procédé selon l'invention, on réalise préférentiellement une étape complémentaire de calibrage à froid de la surface extérieure des zones annulaires en relief par passage dans au moins une filière dont la section de passage est adaptée.

Avantageusement dans ce cas, on effectue le calibrage de la surface extérieure des zones annulaires en relief sur un mandrin inséré dans la pièce tubulaire gonflée et présentant un faible jeu radial par rapport à celle-ci. Ceci permet de bien maintenir la paroi durant l'opération de calibrage et donc d'améliorer la précision de cette opération.

Préférentiellement, on donne une forme non circulaire à la section de passage de la filière de calibrage.

Très préférentiellement, la filière de calibrage permet de réaliser sur la surface des zones annulaires en relief de la pièce tubulaire des surfaces cylindriques cannelées.

Si besoin est, on peut utiliser plusieurs filières de calibrage de sections de passage adaptées de manière à générer des zones annulaires calibrées dont la dimension radiale augmente depuis l'extrémité avant de la pièce tubulaire jusqu'à son arrière.

Avantageusement dans ce cas, on utilise un mandrin dont les rainures annulaires ont une profondeur qui augmente entre celles réalisées à l'extrémité avant et celles à l'arrière dudit mandrin.

Il faut également souligner que la pièce tubulaire peut être très avantageusement obtenue par le procédé selon l'invention dans un même ensemble de passes de déformation plastique en aller-retour sur un même équipement, par exemple du type presse multipostes.

L'invention concerne aussi l'utilisation du procédé de fabrication de pièces tubulaires pour réaliser un arbre tubulaire composite.

Dans un premier mode d'utilisation du procédé selon l'invention, on positionne des pièces rapportées enfilées à faible jeu sur l'ébauche déformée qui résulte de la deuxième étape du procédé selon l'invention, à des endroits déterminés de ladite ébauche déformée situés au droit d'une partie rainurée du mandrin. De la sorte, le gonflement créé par l'extraction du mandrin lors de la troisième étape du procédé selon l'invention sertit les pièces rapportées sur la pièce tubulaire.

Le nombre, la longueur axiale, la position axiale sur la pièce tubulaire et l'orientation angulaire transversale des pièces rapportées sont définis par les besoins de l'arbre tubulaire composite à obtenir.

Préférentiellement pour une telle utilisation du procédé selon l'invention, on met en oeuvre la variante du procédé dans laquelle le mandrin possède des rainures disposées longitudinalement. Les pièces rapportées ont alors un trou axial dont la surface est une surface cylindrique cannelée longitudinalement en creux. Les creux de cannelures sont en outre disposés sur la surface du trou axial des pièces rapportées de manière à correspondre à chacune des rainures du mandrin. De la sorte, lors de l'étape d'extraction du mandrin du procédé selon l'invention, le métal de l'ébauche déformée vient s'appuyer sur la portion de la surface des trous située entre les cannelures et remplir les surfaces libres, notamment les creux de cannelure, en réalisant un excellent sertissage des pièces rapportées sur la pièce tubulaire.

L'arbre tubulaire composite peut ainsi être très avantageusement obtenu en mettant en oeuvre une telle utilisation du procédé selon l'invention dans un même ensemble de passes de déformation plastique en aller-retour sur un même équipement, par exemple du type presse multipostes.

On peut également mettre en oeuvre un autre mode d'utilisation du procédé selon l'invention pour réaliser un arbre tubulaire composite.

Dans ce cas, on met en oeuvre la variante du procédé de fabrication de pièces tubulaires selon l'invention dans laquelle les rainures du mandrin utilisé sont annulaires et dans laquelle on calibre la surface extérieure des zones annulaires obtenues sur la pièce tubulaire. L'arbre tubulaire composite est alors obtenu en emmanchant sur les zones annulaires ainsi calibrées des pièces rapportées munies d'un trou axial de forme et dimensions conjuguées de celles des zones annulaires calibrées, la forme et les dimensions conjuguées dudit trou axial permettant de réaliser un emmanchement serrant entre la pièce tubulaire et les pièces rapportées.

L'invention concerne aussi une pièce tubulaire en métal de forme cylindrique de révolution selon la préambule de la revendication 21.

Selon l'invention, la ou les zones annulaires de siège se trouvant en relief par rapport aux parties cylindriques courantes de la pièce tubulaire possèdent un diamètre intérieur sensiblement identique à celui des parties cylindriques courantes de ladite pièce tubulaire.

On entend ici et dans la suite du présent document par parties cylindriques courantes les parties cylindriques de la pièce tubulaire situées en dehors des zones annulaires en relief.

Préférentiellement, pour empêcher la rotation des pièces rapportées emmanchées par rapport à la pièce tubulaire, la surface des sièges n'est pas une surface de révolution.

Avantageusement pour que les zones d'emmanchement ne constituent pas des zones de faible résistance mécanique, en aucun point de la surface des sièges, l'épaisseur de métal n'est inférieure à celles des parties cylindriques courantes de la pièce tubulaire.

Egalement de manière avantageuse, les pièces tubulaires selon l'invention ont une structure fibrée et les fibres métalliques voisines de la surface suivent la forme du relief des zones annulaires de siège sans être coupées.

On entend ici par texture fibrée l'aspect fibreux présenté par une coupe axiale polie et attaquée avec un réactif macrographique approprié d'un produit métallique qui a subi des opérations de corroyage. Une telle texture fibrée, surtout lorsque les fibres ne sont pas coupées en surface, est le gage d'une bonne résistance aux chocs ou aux sollicitations cycliques.

Toujours avantageusement, la ou les zone(s) annulaire(s) en relief de siège se raccordent sans accident aux parties cylindriques environnantes de la pièce tubulaire par de zones à grand rayon de courbure, ce qui permet de limiter les concentrations de contraintes générées par ces changements de section.

Si nécessaire et, notamment pour faciliter l'emmanchement de plusieurs pièces rapportées, les sièges ont une dimension radiale qui augmente depuis une extrémité de la pièce tubulaire jusqu'à l'autre.

Optionnellement, la pièce tubulaire au lieu d'être constituée d'un seul cylindre peut comporter sur sa longueur une série de parties cylindriques en gradins intérieurs et/ou extérieurs, les diamètres intérieurs et/ou extérieurs des parties en gradins allant en augmentant d'une extrémité à l'autre de la pièce tubulaire.

Avantageusement dans ce cas, les parties en gradins extérieurs et/ou intérieurs se raccordent l'une à l'autre par des zones de transition progressives, par exemple limitées par les surfaces tronconiques.

Les figures suivantes se rapportent à des exemples de modes particuliers de réalisation de l'invention qui seront ensuite décrits en détail.

La figure 1 représente en perspective une pièce tubulaire cylindrique selon l'invention présentant extérieurement plusieurs zones de siège aptes à l'emmanchement serrant de pièces rapportées.

La figure 2 montre en coupe longitudinale selon le plan X un détail de la figure 1 autour d'une zone annulaire de siège.

La figure 3 représente également une pièce tubulaire à gradins cylindriques selon l'invention présentant extérieurement sur le gradin central plusieurs zones de siège aptes à l'emmanchement serrant de pièces rapportées.

La figure 4 représente en perspective un arbre tubulaire composite du genre arbre à cames composite obtenu par le procédé selon l'invention.

Les figures 5 à 14 sont toutes relatives aux différentes étapes du procédé selon l'invention pour fabriquer une pièce tubulaire du type de la figure 1 et ont été dessinées à la même échelle.

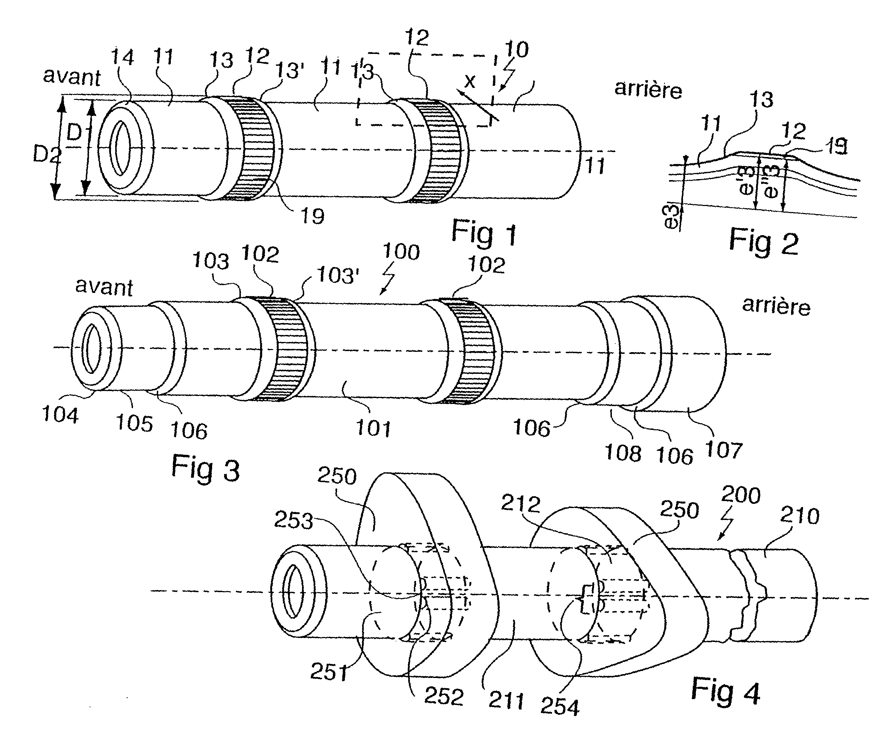

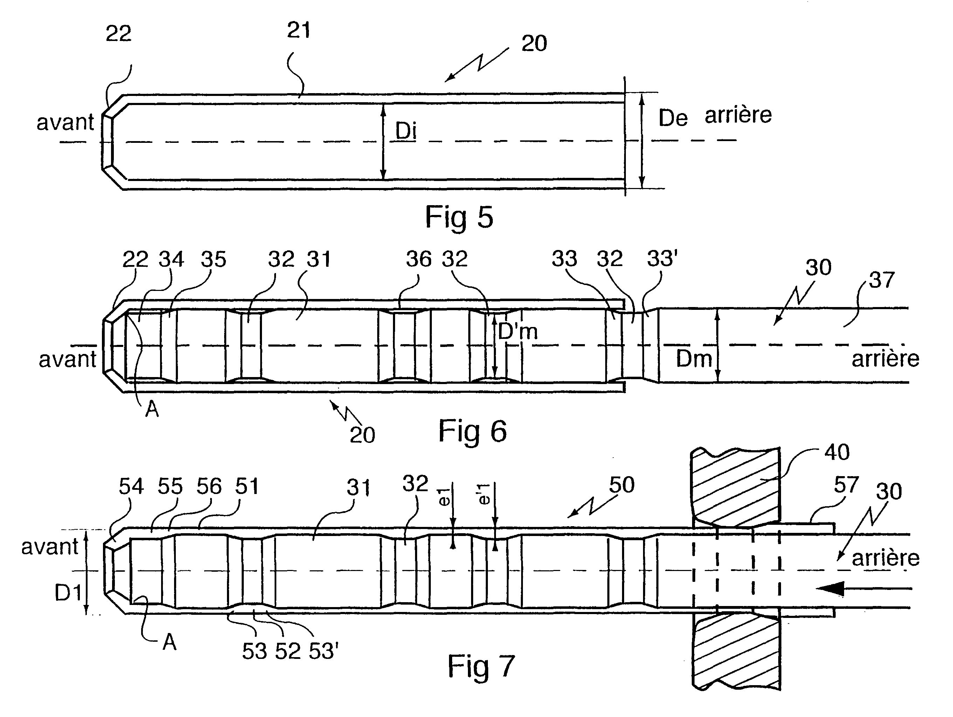

La figure 5 montre en coupe longitudinale une ébauche tubulaire utilisée pour fabriquer une pièce tubulaire du type de la figure 1.

La figure 6 montre en coupe longitudinale l'ébauche de la figure 5 montée sur un mandrin de forme à rainures annulaires.

La figure 7 montre en coupe longitudinale l'ébauche de la figure 6 en cours de déformation sur le mandrin.

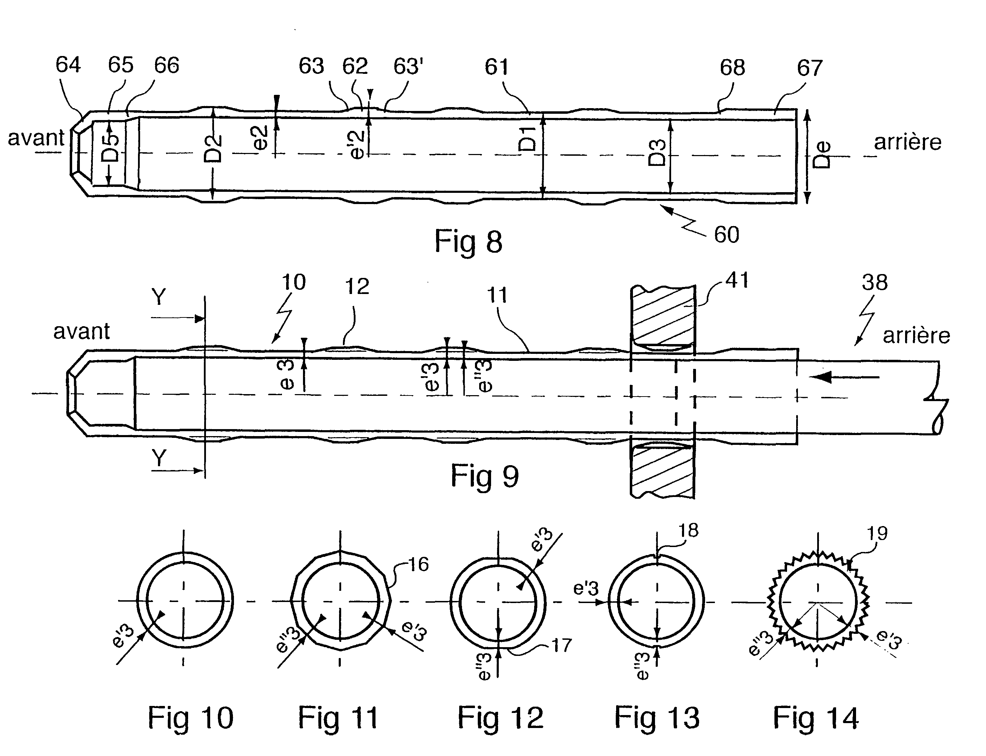

La figure 8 montre en coupe longitudinale l'ébauche de la figure 7 après extraction du mandrin.

La figure 9 montre en coupe longitudinale l'ébauche de la figure 8 en cours de calibrage de la surface extérieure des zones annulaires de siège.

La figure 10 montre une section droite selon YY au droit d'une zone annulaire calibrée lorsque la surface de siège est une surface cylindrique.

La figure 11 montre une section droite selon YY au droit d'une zone annulaire calibrée lorsque la surface de siège est une surface prismatique.

La figure 12 montre une section droite selon YY au droit d'une surface annulaire calibrée lorsque la surface de siège est cylindrique à méplats.

La figure 13 montre une section droite selon YY au droit d'une zone annulaire calibrée lorsque la surface de siège est cylindrique à rainures longitudinales.

La figure 14 montre une section droite selon YY au droit d'une zone annulaire calibrée lorsque la surface de siège est cylindrique cannelée.

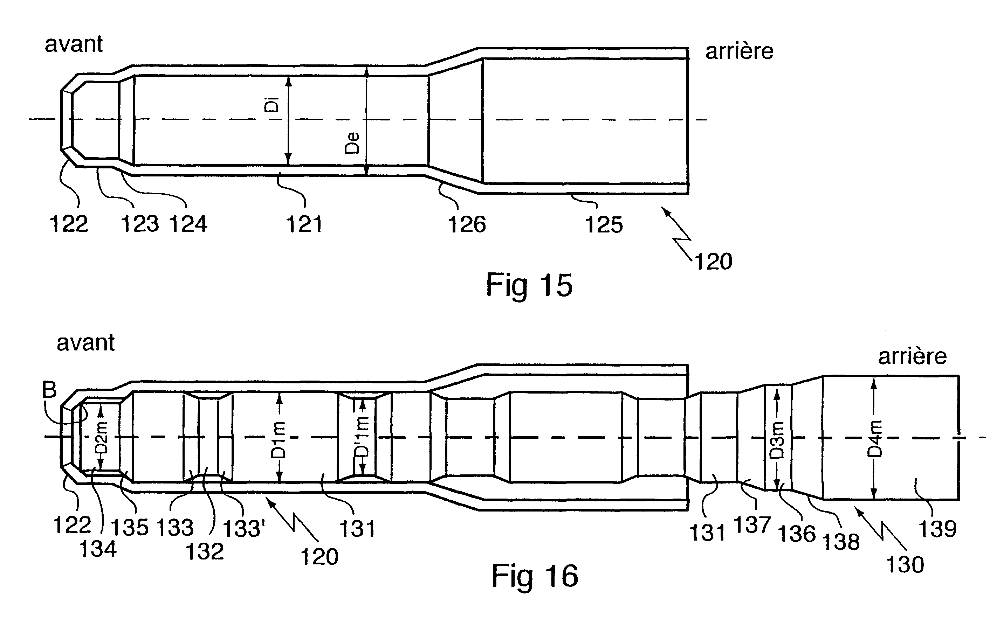

Les figures 15 à 19 sont toutes relatives au procédé selon l'invention pour fabriquer une pièce tubulaire du type de la figure 3 et ont été dessinées à la même échelle.

La figure 15 montre en coupe longitudinale une ébauche utilisée pour fabriquer une pièce tubulaire du type de la figure 3.

La figure 16 montre en coupe longitudinale l'ébauche de la figure 15 montée sur un mandrin de forme à rainures annulaires.

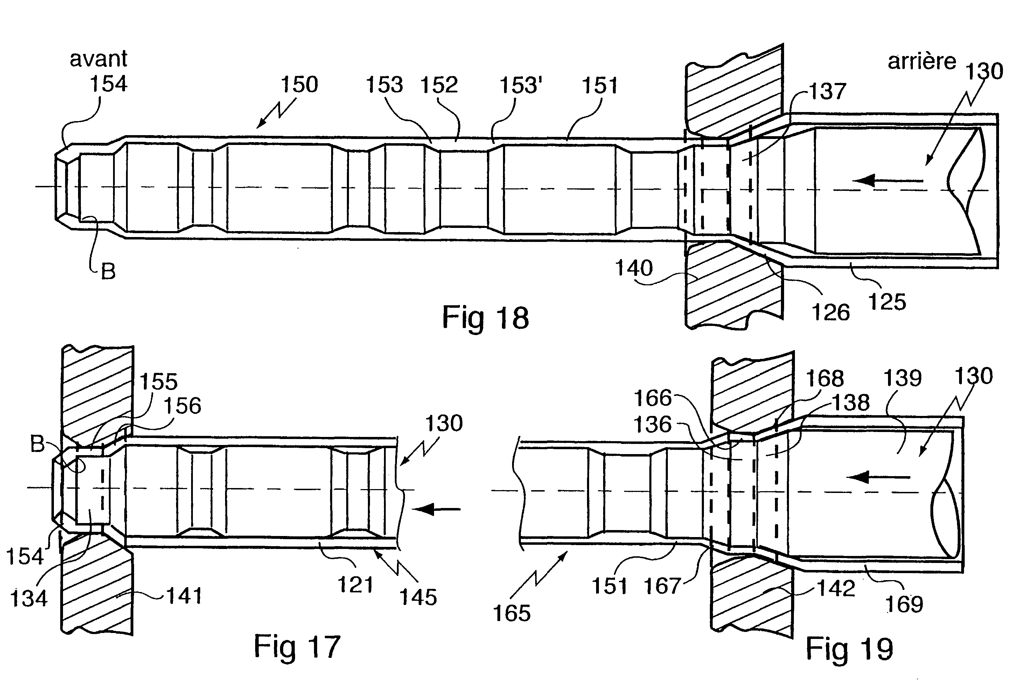

La figure 17 montre en coupe longitudinale une passe de déformation sur mandrin réalisée sur l'avant de l'ébauche de la figure 16.

La figure 18 montre en coupe longitudinale une passe de déformation sur mandrin réalisée en partie centrale de l'ébauche de la figure 17.

La figure 19 montre en coupe longitudinale une passe de déformation sur mandrin réalisée sur l'arrière de l'ébauche de la figure 18.

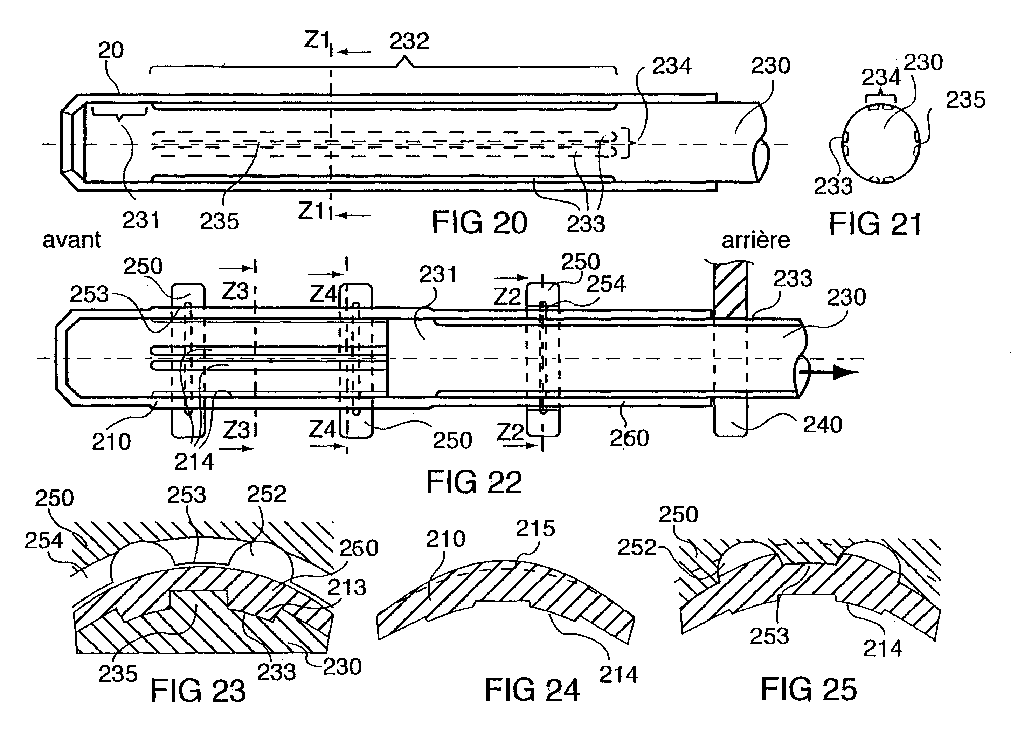

Les figures 20 à 25 sont toutes relatives à l'utilisation du procédé selon l'invention pour fabriquer l'arbre à cames composite de la figure 4.

La figure 20 montre un mandrin à rainures longitudinales utilisé pour fabriquer l'arbre à cames composite de la figure 4 à partir d'une ébauche du genre de la figure 5.

La figure 21 est une coupe en section droite du mandrin de la figure 20 selon Z1Z1.

La figure 22 représente une vue longitudinale de la pièce tubulaire et des cames rapportées au cours de l'étape d'extraction du mandrin.

La figure 23 représente un détail agrandi de la figure 22 en coupe selon Z2Z2, dans une zone non encore gonflée par le mandrin.

La figure 24 représente un détail agrandi de la figure 22 en coupe selon Z3Z3, entre 2 cames serties.

La figure 25 représente un détail agrandi de la figure 22 en coupe selon Z4Z4, au droit d'une came sertie.

La figure 1 montre une pièce tubulaire 10, par exemple en acier 25CrMo4 selon désignation Euronorm.

Cette pièce tubulaire 10 présente une partie courante ou corps 11 cylindrique de révolution de diamètre extérieur D1 = 29 mm et plusieurs zones annulaires de siège 12 coaxiales à la pièce 10 et extérieurement en relief par rapport à celle-ci. Le diamètre extérieur enveloppe des sièges 12 est de 32 mm.

La pièce tubulaire 10 présente un diamètre intérieur sensiblement constant et égal à 25 mm tant au droit du corps 11 que des sièges 12 hormis au niveau d'une extrémité 14 dont le métal a été repoussé radialement vers l'intérieur.

La surface extérieure de chacun des sièges 12 est une surface cylindrique finement cannelée: voir figure 14. Elle est définie de manière précise pour emmancher de manière serrante en les immobilisant des pièces rapportées non représentées comportant chacune un trou axial de forme conjuguée à celle des sièges.

Les cannelures des sièges 12 coopèrent avec celles conjuguées de la surface du trou des pièces rapportées pour verrouiller en rotation ces dernières, les pièces rapportées pouvant ainsi être calées angulairement de manière précise dans un plan transversal par rapport à la pièce tubulaire 10, ce qui est très important lorsque les pièces rapportées sont par exemple les cames d'un arbre à cames pour un moteur à combustion interne.

La profondeur des cannelures 19 est telle que l'épaisseur de métal e"3 à fond de cannelure est au moins égale à celle au corps e3 de la pièce tubulaire 10.

Le matériau de la pièce a une texture fibrée, les fibres métalliques au voisinage de la surface extérieure suivant celle-ci sans la couper, notamment au niveau des zones de siège comme le montre la figure 2. Le procédé de fabrication exposé par la suite qui n'incorpore pas d'étape d'usinage permet notamment d'obtenir une telle texture fibrée.

Les zones de siège 12 se raccordent progressivement au corps 11 de la pièce tubulaire 10 par des zones 13, 13' à grand rayon de courbure.

Les figures 10 à 13 montrent des variantes de réalisation des surfaces de siège: cylindrique, prismatique régulière à douze faces 16, cylindrique à deux méplats opposés 17, cylindrique à deux rainures opposées 18.

Toutes ces formes de siège ont un axe de symétrie qui est l'axe de la pièce tubulaire 10. Les formes non cylindriques permettent comme dans le cas des cannelures de verrouiller les pièces rapportées en rotation. En aucun cas, l'épaisseur e"3 des lieux de plus faible épaisseur n'est inférieure à l'épaisseur e3 des parties courantes 11 de la pièce 10.

La figure 3 montre une pièce tubulaire 100 comportant, outre un corps cylindrique de révolution 101, une partie cylindrique coaxiale 105 à l'avant de plus faible diamètre intérieur et extérieur que le corps 101 et des parties cylindriques coaxiales 107, 108 à l'arrière de plus grands diamètres intérieur et extérieur que le corps 101, les parties cylindriques 105, 101, 108, 107 formant ainsi des gradins cylindriques coaxiaux sur la pièce tubulaire 100.

Ces gradins 105, 108, 107 ont sensiblement même longueur intérieurement qu'extérieurement et se raccordent progressivement au corps 101 par des parties 106 limitées par des surfaces tronconiques tant extérieurement qu'intérieurement.

Le corps 101 comporte extérieurement plusieurs zones annulaires de siège 102 ayant les mêmes caractéristiques que les zones 12 de la figure 1.

Bien que cela ne soit pas représenté, on peut concevoir que des gradins cylindriques tels que 105, 107, 108 comportent aussi des zones de siège du type 102.

Comme pour la pièce tubulaire 10, l'avant 104 de la pièce tubulaire 100 a été repoussé vers l'intérieur pour faciliter la réalisation de la pièce tubulaire comme on le verra par la suite.

La figure 4 montre un arbre à cames composite 200 comprenant une pièce tubulaire 210, par exemple en acier 25CrMo4 selon Euronorm sur laquelle sont serties des cames 250 à acier fortement allié à dureté élevée.

La pièce tubulaire 210 est présente:
- une partie courante 211 cylindrique de révolution de diamètre extérieur 34 mm et de diamètre intérieur 28 mm
- des zones annulaires de siège 212 pour les cames 250. Ces zones de siège 212 ont un diamètre intérieur voisin de celui des parties courantes 211.

Les cames 250 peuvent avoir une forme directement et donc avantageusement obtenue par métallurgie des poudres et/ou avoir subi des opérations d'usinage. Elles comportent chacune un trou axial 251 dans lequel la pièce tubulaire 210 est emmanchée.

La surface des trous axiaux 251 des cames 250 est une surface cylindrique comportant des cannelures en creux 252 séparées par des surfaces d'appui 253 sensiblement rectangulaires.

Les cannelures 252 des cames 250 sont par exemple au nombre de huit réparties en quatre groupes 254 de deux et ont chacune une largeur de 4 mm pour une profondeur de 1,5 mm.

Le sertissage des cames 250 est obtenu par l'incrustation de certaines des surfaces d'appui 253 dans le métal en surface des zones de siège 212.

Le procédé selon l'invention sera maintenant décrit de manière non limitative à travers divers exemples de réalisation.

Dans un premier exemple, on cherche à réaliser une pièce tubulaire du genre de la pièce 10 de la figure 1.

Pour cela on approvisionne dans une première étape une ébauche tubulaire 20 (voir figure 5) constituée d'un corps cylindrique de révolution 21 de diamètre intérieur Di et extérieur De bien définis dont une extrémité appelée ci-après extrémité avant a été repoussée radialement vers l'intérieur selon 22.

La pièce tubulaire 10 est obtenue à partir de l'ébauche 20 par un nombre limité d'opérations à froid effectuées en aller-retour sur un même équipement, par exemple sur une même presse multipostes.

L'ébauche 20 est, de façon en soi connue, préalablement lubrifiée par phosphatation et savonnage aussi bien sur sa surface intérieure que sur la surface extérieure de manière à pouvoir subir les passes successives de filage sans grippage et à donner un aspect lisse aux surfaces extérieures et intérieures de la pièce 10 et à procurer ainsi à la pièce 10 de bonnes caractéristiques de résistance aux chocs et/ou à la fatigue.

Dans la première étape du procédé selon ce premier exemple, un mandrin longiligne 30 de forme générale cylindrique et de diamètre Dm légèrement inférieur à Di est enfilé dans l'ébauche 20 jusqu'à venir en A en butée contre l'extrémité 22 : voir figure 6.

On désigne conventionnellement par "avant" les parties de l'ébauche 20 et du mandrin 30 dirigées vers l'extrémité 34 du mandrin 30 par où débutera la déformation et par arrière les parties opposées. C'est ainsi que la partie 22 correspond à l'avant de l'ébauche 20.

Le mandrin 30 comprend un corps cylindrique 31 de diamètre Dm et des rainures annulaires.

Les rainures ont un profil trapézoïdal et sont constituées d'une partie cylindrique 32 de diamètre D'm égal à 21 mm et de deux parties tronconiques 33 et 33' réalisant le raccordement avec le corps 31 du mandrin.

L'extrémité avant 34 du mandrin présente un nez cylindrique de diamètre également de 21 mm raccordé par une partie tronconique 35 avec le corps 31 du mandrin.

L'inclinaison des parties tronconiques telles que 33, 33' ou 35 par rapport à l'axe du mandrin est par exemple de 15°.

Dans la deuxième étape du procédé selon ce premier exemple, une filière 40 présentant de manière connue une section de passage et des sections d'entrée/sortie est disposée dans l'axe de l'équipage constitué par l'ébauche 20 et le mandrin 30 et à l'avant de cet équipage. La filière 40 a une section de passage circulaire de diamètre inférieur au diamètre De de l'ébauche 20.

Le mandrin 30 est poussé par un vérin non représenté dans la direction de l'avant et, étant en butée en A, entraîne vers l'avant l'ébauche 20 en obligeant par conséquent le métal de l'ébauche à s'écouler entre la filière 40 et la section du mandrin 30 au droit de cette dernière. Cette deuxième étape du procédé est donc une opération de filage ou d'extrusion à froid.

On pourrait tout aussi bien concevoir de tirer l'équipage (20 + 30) dans la filière (étirage) ou de déplacer la filière sur l'équipage immobile.

On obtient après cette deuxième étape une ébauche déformée 50 de longueur supérieure à l'ébauche 20 et de diamètre extérieur D1 voisin du diamètre de filière au retour élastique près.

Cette ébauche déformée présente un corps 51 de diamètre intérieur Dm définissant une épaisseur au corps e1 et des zones annulaires 52 imprimées dans les rainures 32 du mandrin et d'épaisseur e'1 avec e'1 > e1, ces zones annulaires correspondant au remplissage des espaces 36 lors de leur passage dans la filière.

Pour remplir correctement les espaces 36 entre rainures du mandrin 30 et ébauche 20, la section annulaire des zones 52 est au plus égale à la section initiale du corps 21 de l'ébauche 20.

Il faut en outre que la déformation du métal lors de cette opération soit inférieure à sa capacité de déformation. Les essais effectués montrent ainsi qu'il ne faut pas chercher à réaliser dans le cas d'acier du genre 25CrMo4 recuit des surépaisseurs (e'1 - e1) de plus de 40 % de e1 entre les zones annulaires telles que 52 et le corps 51.

A noter qu'en variante, la passe de filage peut être interrompue avant que la filière n'atteigne l'extrémité arrière de l'ébauche. Il en résulte alors une partie 57 à l'arrière de l'ébauche déformée 50 qui conserve les caractéristiques dimensionnelles (De, Di) de l'ébauche 20.

On extrait axialement dans la troisième étape du même procédé le mandrin 30 par l'arrière de l'ébauche déformé 50, une fourchette dégrafeuse disposée à l'arrière de l'ébauche déformée 50 maintenant, par exemple, cette dernière immobile.

Les parties cylindriques 31 au corps du mandrin 30 vont devoir monter sur les zones annulaires surépaissies 52 de l'ébauche déformée 50 en les repoussant radialement vers l'extérieur.

On obtient ainsi dans un même ensemble de passes de déformation plastique en aller-retour sur la même presse la pièce tubulaire gonflée 60 montrée à la figure 8 et qui présente:
- un diamètre intérieur D3 quasi constant sauf à l'extrémité avant 65 qui n'a pas été repoussée vers l'extérieur et forme un gradin cylindrique intérieur.
- un diamètre extérieur D1 sensiblement constant et égal à celui de l'ébauche déformée 50 tant au corps 61 qu'à l'extrémité avant 65 non repoussée.
- des zones annulaires extérieurement en relief telles que 62, de diamètre extérieur D2, reliées au corps 61 par des zones de transition 63, 63' à grand rayon de courbure.

Ces zones annulaires 62 vont pouvoir constituer des ébauches de zones de siège pour des pièces rapportées à emmancher ultérieurement.

La zone 67 de diamètre extérieur De correspond à la zone 57 non déformée par la filière 40 lors de l'étape précédente.

Les zones 66 et 68 correspondent à des transitions progressives respectivement sur le diamètre intérieur et sur le diamètre extérieur de la pièce 60.

La pièce tubulaire 60 subit alors une opération complémentaire de calibrage des zones annulaires 62 qui permet de réaliser des surfaces de siège conjuguées de la surface du trou axial des pièces rapportées. La précision obtenue sur les dimensions des surfaces de siège par l'opération de calibrage permet l'emmanchement serrant ultérieur des pièces rapportées.

Cette opération de calibrage est aussi effectuée par filage à froid sur le même poste de travail et est illustrée par la figure 9.

Un mandrin de calibrage 38 cylindrique est tout d'abord enfilé à faible jeu par l'arrière de la pièce 60.

L'équipage pièce 60 et mandrin 38 est ensuite disposé dans l'axe d'une filière de calibrage 41 et est poussé dans la filière 41.

On peut aussi bien tirer ledit équipage (60 + 38) dans la filière 41 ou déplacer la filière 41 sur l'équipage maintenu immobile.

La section de passage de la filière 41 est définie pour calibrer exactement la surface des sièges 12 sans toucher au diamètre D1 des parties courantes 11, le mandrin 38 permettant d'assurer un maintien de la paroi de la pièce 60 donc d'effectuer le calibrage avec davantage de précision.

S'agissant d'un calibrage de précision, la variation de section imposée au métal des zones annulaires 62 lors du calibrage doit être limitée. L'homme du métier connaît de telles impositions.

Après calibrage, le mandrin 38 est extrait et la pièce finie 10 évacuée.

Les figures 10 et 14 déjà présentées ci-avant montrent différentes variantes de forme des sièges 12: cylindrique lisse, prismatique, cylindrique à méplats, cylindrique à rainures, cylindrique cannelée.

A noter que si l'on désire des sièges 12 calibrés dont la dimension radiale croît faiblement depuis l'extrémité avant de la pièce tubulaire jusqu'à son arrière, il convient d'utiliser un mandrin 30 dont les rainures annulaires ont une profondeur qui croit légèrement depuis l'avant jusqu'à l'arrière et une filière de calibrage différente par dimension radiale de siège. Une telle disposition facilite l'emmanchement de plusieurs pièces rapportées sur une même pièce tubulaire.

Dans un deuxième exemple, nous allons décrire comment obtenir une pièce tubulaire à gradins cylindriques du genre de la pièce 100 de la figure 3.

Pour cela, certaines étapes du procédé décrits dans le premier exemple ont été modifiées et seront plus spécifiquement présentées.

La figure 15 présente l'ébauche tubulaire 120 utilisée dans la première étape du procédé pour fabriquer une pièce tubulaire du genre de la pièce 100 de la figure 3.

Cette ébauche tubulaire présente un corps tubulaire 121 cylindrique de révolution de diamètre extérieur De et de diamètre intérieur Di prolongé à une extrémité par une partie cylindrique coaxiale rétreinte 123 de diamètres extérieur et intérieur inférieurs à ceux au corps 121, la partie cylindrique 123 se terminant en extrémité par une zone 122 repoussée radialement vers l'intérieur, le corps tubulaire étant prolongé à l'autre extrémité par une partie cylindrique coaxiale gonflée 125 de diamètres intérieur et extérieur plus grands qu'au corps 121.

Les parties rétreintes 123 et gonflées 125 sont raccordées de manière progressive au corps 121 par les parties 124 et 126 et sont obtenues par des moyens de déformation de tubes en soi connus.

Une telle ébauche 120 permet notamment de limiter les déformations qui seraient nécessaires sinon pour réaliser les gradins cylindriques de la pièce tubulaires 100.

Un mandrin 130 est inséré dans la première étape du procédé selon ce deuxième exemple dans l'ébauche 120 par l'extrémité 125 jusqu'à venir en butée en B contre l'intérieur de la partie repoussée 122: voir figure 16.

Le mandrin 130 comprend, outre un corps cylindrique 131 de diamètre Dm avec des rainures annulaires des parties cylindriques coaxiales 134, 136, 139 en extrémités, le diamètre de ces parties augmentant de l'extrémité avant 134 à l'extrémité arrière 139.

Le profil des rainures annulaires est trapézoïdal et est obtenu sur le mandrin 130 par des parties cylindriques 132 de diamètre D'1m < D1m entourées de parties tronconiques 133, 133'.

Les diamètres D1m, D2m, D4m sont adaptés pour s'engager dans les parties 121, 123 et 125 de l'ébauche 120.

Le raccordement entre parties cylindriques 134 - 131, 131 - 136, 136 - 139 du mandrin 130 est respectivement obtenu par des parties tronconiques 135, 137 et 138.

L'angle entre ces parties tronconiques 135, 137 et 138 et l'axe du mandrin est par exemple de 15°.

La deuxième étape du procédé selon ce deuxième exemple est conduite comme dans le cas du premier exemple par filage à froid sauf que trois différentes filières de diamètre de section de passage croissant sont successivement amenées dans l'axe de l'équipage (ébauche + mandrin) et travaillent différentes zones de l'ébauche 120 dans laquelle le mandrin 130 est maintenu en butée en B.

La première passe de filage (figure 17) est réalisée avec la filière 141 en poussant l'équipage (120 + 130) dans la filière de manière à déformer seulement l'extrémité avant 123 de l'ébauche 120, la section de passage de la filière 141 façonnant la partie cylindrique 155 de l'ébauche déformée 145 et la zone d'entrée de la même filière 141 façonnant le raccordement tronconique 156 de la partie cylindrique 155 au corps 121.

L'ébauche 145 est alors ramenée en arrière avec le mandrin 130 et la filière 141 évacuée.

L'ébauche obtenue 145 subit une deuxième passe de filage (figure 18) en utilisant la filière 140 destinée à former le diamètre extérieur D1 de la pièce 100 et les zones annulaires 152 imprimées en relief intérieur dans les rainures annulaires 132 du mandrin 130.

Cette deuxième passe de filage est interrompue en arrivant sur la partie tronconique 137 du mandrin. L'ébauche 150 et le mandrin 130 sont ramenés en arrière et la filière 140 évacuée.

Une troisième passe de filage (figure 19) est réalisée au droit des zones 136 et 138 du mandrin avec une filière 142 pour constituer le gradin 166 et le raccordement 168, l'extrémité arrière 169 de la pièce restant brute.

L'ébauche déformée 165 et le mandrin 130 sont ramenés en arrière et la filière 142 évacuée.

L'ébauche déformée 165 obtenue après cette troisième passe de filage subit ensuite une opération non représentée mais semblable à la figure 8 de gonflement radial vers l'extérieur des zones annulaires 152 par montée sur les zones annulaires 152 des parties cylindriques 131 du mandrin 130 lors de l'extraction de celui-ci vers l'arrière, les gradins 134, 136, 139 ne gênant pas l'extraction du mandrin 130 de par leur disposition.

La pièce tubulaire gonflée obtenue subit enfin une opération complémentaire non représentée mais semblable à celle de la figure 9 de calibrage des surfaces de siège 102.

Bien que cela ne soit pas non plus représenté, on peut concevoir que les parties cylindriques 134 ou 136 du mandrin 130 comportent des rainures annulaires du genre 132. On obtient de la sorte une pièce tubulaire à plusieurs étages de sièges à condition d'utiliser une filière de calibrage par étage de sièges.

On peut aussi concevoir que l'ébauche 120 ne comporte que des gradins cylindriques extérieurs, sa surface intérieure ayant un diamètre constant. Le mandrin utilisé est alors du type purement cylindrique 30 et l'ébauche subit trois passes de filage dans les filières 141, 140, 142. La pièce tubulaire obtenue dans ce cas ne comporte que des gradins cylindriques extérieurs, sa surface intérieure ayant un diamètre constant.

On peut encore concevoir que l'ébauche 120 ne comporte que des gradins cylindriques intérieurs, sa surface extérieure ayant un diamètre constant. Le mandrin utilisé est alors du type i30 à gradins et l'ébauche subit une seule passe de filage dans la filière 40. La pièce tubulaire obtenue dans ce cas ne comporte que des gradins cylindriques intérieurs, sa surface extérieure ayant un diamètre constant.

Ces deux possibilités pouvant facilement être déduites par l'homme du métier, elles n'ont pas été représentées.

Dans un troisième exemple, nous allons décrire comment obtenir l'arbre à cames composite 200 de la figure 4 en utilisant le procédé selon l'invention.

Pour obtenir l'arbre à cames composite 200, on part de l'ébauche 20 de la figure 5.

On insère dans l'ébauche 20 dans une première étape de ce troisième exemple un mandrin 230 cylindrique présentant une partie lisse 231 en extrémités et une partie centrale rainurée 232, le diamètre du mandrin 230 étant constant sur sa longueur et légèrement inférieur au diamètre intérieur de l'ébauche 20: voir figure 20.

Les rainures 233 ont une disposition longitudinale et sont au nombre de huit sur la circonférence du mandrin 230, réparties en quatre groupes 234 de deux rainures: voir figure 21.

Le profil en section droite de chaque rainure 233 est trapézoïdal avec une largeur de grande et petite bases respectivement de 3 et 2 mm pour une hauteur de 0,6 mm dans le cas d'un mandrin de diamètre 28 mm, l'espace 235 entre deux rainures d'un même groupe étant relativement faible de l'ordre de 1,8 mm.

On dispose dans une deuxième étape de ce troisième exemple une filière du genre 40 dans l'axe de l'équipage (ébauche 20 + mandrin 230), la filière possédant une section de passage circulaire de diamètre inférieur au diamètre extérieur De de l'ébauche 20, et on pousse l'équipage, le mandrin 230 étant maintenu en butée avant.

L'écoulement de métal résultant du passage entre la filière et le mandrin 230 est conduit de manière à imprimer le métal de l'ébauche dans les rainures longitudinales 233 du mandrin 230 en les remplissant.

Pour cela, la section de l'ébauche déformée 260 au droit de la partie rainurée 232 du mandrin 230 (voir figure 23) est au plus égale à la section du corps cylindrique 21 de l'ébauche.

Compte tenu de la faible section des espaces entre ébauche 20 et mandrin 230 au niveau des parties rainurées 232, il n'est pas nécessaire de réaliser une forte réduction du diamètre extérieur par filage pour remplir lesdits espaces.

Les efforts de filage en sont d'autant réduits ainsi que les efforts lors de l'extraction ultérieure du mandrin 230.

La troisième étape d'extraction du mandrin 230 est représentée à la figure 22 en cours d'extraction de celui-ci.

Entre la deuxième et la troisième étape, on a enfilé à faible jeu sur l'ébauche déformée 260 des cames 250 ou d'autres pièces rapportées à trou axial.

Comme indiqué à la figure 4, la surface du trou axial 251 des cames 250 est une surface cylindrique comportant:
- des cannelures longitudinales en creux 252 disposées circonférentiellement sur la surface du trou axial 251 de manière à correspondre à chacune des rainures (233) du mandrin (230)
- et des zones d'appui 253 de forme sensiblement rectangulaire situées circonférentiellement entre les cannelures.

La surface du trou axial 251 comporte également une rainure circonférentielle 254 de longueur 4 mm et de profondeur 1 mm.

Les cames 250 sont positionnées sur l'ébauche déformée issue de la deuxième étape à l'aide de moyens connus par ailleurs.

Lors de la troisième étape d'extraction du mandrin 230 (voir fig. 22) à l'aide de la fourchette dégrafeuse 240, la partie lisse 231 du mandrin 230 à l'avant de la partie rainurée 232 et dans le prolongement des rainures 233 vient monter sur les zones 213 de l'ébauche déformée 260 imprimées dans les rainures 232 du mandrin. Il s'ensuit un déplacement radial du métal de la pièce tubulaire au droit des rainures illustré par les figures 24 et 25.

Compte tenu de l'élasticité du métal, on retrouve sur la surface intérieure de la pièce tubulaire 210 après extraction du mandrin 230 des rainures longitudinales en relief très peu marquées de hauteur 0,3 mm soit la moitié de la hauteur initiale des reliefs 213 imprimés dans les rainures 233 du mandrin.

En dehors des zones annulaires de siège 212 des cames 250, on observe simplement un léger gonflement 215 du diamètre extérieur au droit de chaque groupe de rainures.

Au niveau d'une zone de siège 212, dans la mesure où les creux de cannelure 252 ont été judicieusement disposées, à savoir chacun des creux de cannelure 252 au droit d'une rainure 233, le métal des zones de siège 212 vient buter sur les surfaces des zones d'appui 253 des cames 250 alors qu'il peut s'écouler librement dans les cannelures 252, dans la rainure 254 et de chaque côté axialement de la came 250.

Il en résulte un sertissage des cames 250 sur l'arbre 210 permettant de verrouiller les cames 250 en position tant axialement qu'angulairement.

En utilisant les dimensions déjà indiquées conduisant à des surfaces d'appui 253 incrustées sur une profondeur de 0,5 mm, il faut mettre en oeuvre une force axiale de 10 KN pour dessertir des cames 250 serties sur une longueur axiale de 10 mm.

De telles valeurs de force de dessertissage sont largement suffisantes pour des arbres à cames.

La présente invention n'est pas bien sûr limitée aux exemples ci-dessus mais couvre toute réalisation tombant dans le cadre de l'invention telle que revendiquée.

## Revendications

1. Procédé de fabrication de pièce tubulaire métallique (10, 100, 210) de forme cylindrique consistant à soumettre une ébauche tubulaire (20, 120) cylindrique de révolution à des opérations de déformation plastique, ledit procédé de fabrication étant **caractérisé en ce que** :
- dans une première étape, on insère dans l'ébauche (20, 120) un mandrin (30, 130, 230) de forme générale cylindrique de révolution présentant un faible jeu radial par rapport au diamètre intérieur de l'ébauche, ledit mandrin comportant sur une fraction seulement de sa longueur une ou plusieurs rainures (32, 132, 233) dont l'axe a une orientation donnée par rapport à l'axe du mandrin,
- dans une deuxième étape, on fait passer axialement l'équipage ébauche-mandrin dans au moins une filière (40, 140, 141, 142) de section circulaire de manière à ce que le métal de ladite ébauche s'écoule annulairement entre la section de passage de la filière et le mandrin en remplissant les rainures (32, 132, 233) dudit mandrin et en s'y imprimant en relief (52, 152, 213), ledit mandrin (30, 130, 230) étant maintenu immobile par rapport à l'extrémité avant de l'ébauche (20, 120) où est commencée la déformation,
- dans une troisième étape, on extrait axialement le mandrin (30, 130, 230) de l'ébauche déformée (50, 165, 260) de manière à ce que les parties non rainurées (31, 131, 231) du mandrin adjacentes axialement aux parties rainurées montent sur les zones (52, 152, 213) de l'ébauche déformée imprimées en relief lors de la deuxième étape en réalisant un gonflement (62, 215) de la surface extérieure de ladite ébauche déformée au niveau desdites zones imprimées en relief.

2. Procédé de fabrication de pièce tubulaire selon la revendication 1 **caractérisé en ce que**, pour immobiliser le mandrin (30, 130, 230) par rapport à l'extrémité avant de l'ébauche (20, 120), on utilise une ébauche sur laquelle a été constituée une butée intérieure (A, B) en repoussant vers l'axe le métal (22, 122) de ladite extrémité avant et on maintient durant la deuxième étape le mandrin (30, 130, 230) en appui axial contre ladite butée (A, B).

3. Procédé de fabrication de pièce tubulaire selon la revendication 1 ou 2, **caractérisé en ce que** la section droite des rainures (32, 132, 233) du mandrin a un profil sensiblement trapézoïdal.

4. Procédé de fabrication de pièce tubulaire (100) selon l'une quelconque des revendications 1 à 3 **caractérisé en ce que**:
- l'on utilise une ébauche (120) comportant extérieurement une série de parties cylindriques coaxiales en gradins (123, 121, 125), les parties de plus faible diamètre (123) étant situées à l'avant de l'ébauche,
- l'on met en oeuvre durant la deuxième étape dudit procédé plusieurs filières (141, 140, 142) de diamètres différents travaillant des parties différentes (105, 101, 107) de l'ébauche (120), au moins une des filières (140) effectuant le remplissage (152) des rainures (132) du mandrin.

5. Procédé de fabrication de pièce tubulaire (100) selon l'une quelconque des revendications 1 à 3 **caractérisé en ce que** l'on utilise:
- une ébauche (120) comportant intérieurement une série de parties cylindriques coaxiales en gradins (123, 121, 125), les parties de plus faible diamètre (123) étant situées à l'avant de l'ébauche,
- un mandrin (130) à parties cylindriques coaxiales en gradins (134, 131, 136, 139) dont les diamètres vont en augmentant depuis son extrémité avant jusqu'à son extrémité arrière en étant adaptés à l'ébauche, les rainures (132) étant disposées sur une ou sur plusieurs des parties cylindriques dudit mandrin.

6. Procédé de fabrication de pièce tubulaire (100) selon les revendications 4 et 5 prises conjointement **caractérisé en ce que**:
- sur l'ébauche (120), les gradins cylindriques extérieurs sont positionnés de manière à correspondre aux gradins cylindriques intérieurs,
- la zone de travail des filières (141, 140, 142) est adaptée pour générer sur la pièce tubulaire (100) des gradins cylindriques extérieurs (105, 101,107, 108) correspondant aux gradins cylindriques intérieurs.

7. Procédé de fabrication de pièce tubulaire (10, 100, 210) selon l'une quelconque des revendications 1 à 6 **caractérisé en ce que** la seconde étape dudit procédé est réalisée par filage à froid.

8. Procédé de fabrication de pièce tubulaire (210) selon l'une quelconque des revendications 1 à 7 **caractérisé en ce que** les rainures (233) du mandrin (230) sont disposées longitudinalement sur celui-ci.

9. Procédé de fabrication de pièce tubulaire (10, 100) selon l'une quelconque des revendications 1 à 7 **caractérisé en ce que** le mandrin (30, 130) comporte une ou plusieurs rainures annulaires (32, 132) de manière à obtenir après la troisième étape dudit procédé une pièce tubulaire gonflée (60) présentant extérieurement une ou des zones annulaires (62) en relief.

10. Procédé de fabrication de pièce tubulaire (10, 100) selon la revendication 9 **caractérisé en ce que** l'on réalise une étape complémentaire de calibrage à froid de la surface extérieure des zones annulaires en relief (62) par passage dans au moins une filière (41) dont la section de passage est adaptée.

11. Procédé de fabrication de pièce tubulaire (10, 100) selon la revendication 10 **caractérisé en ce que** l'on effectue le calibrage de la surface extérieure des zones annulaires en relief (62) sur un mandrin (38) inséré dans la pièce tubulaire gonflée (60) et présentant un faible jeu radial par rapport à celle-ci.

12. Procédé de fabrication de pièce tubulaire (10, 100) selon la revendication 10 ou 11 **caractérisé en ce que** l'on donne une forme non circulaire à la section de passage de la filière de calibrage (41).

13. Procédé de fabrication de pièce tubulaire (10, 100) selon la revendication 12 **caractérisé en ce que** la filière de calibrage (41) permet de réaliser sur la surface des zones annulaires en relief de la pièce tubulaire (10, 100) des surfaces cylindriques cannelées (12).

14. Procédé de fabrication de pièce tubulaire (10) selon l'une quelconque des revendications 10 à 13 **caractérisé en ce que** l'on utilise plusieurs filières de calibrage (41) de sections de passage adaptées de manière à générer des zones annulaires calibrées (12) dont la dimension radiale augmente depuis l'extrémité avant de la pièce tubulaire (10) jusqu'à l'arrière.

15. Procédé de fabrication de pièce tubulaire (10) selon la revendication 14 **caractérisé en ce que** les rainures annulaires (32) du mandrin (30) ont une profondeur qui augmente entre celles réalisées à l'extrémité avant et celles à l'arrière dudit mandrin.

16. Procédé de fabrication de pièce tubulaire selon l'une quelconque des revendications 1 à 15 **caractérisé en ce que** la pièce tubulaire (10, 100, 210) est obtenue dans un même ensemble de passes de déformation plastique en aller-retour sur un même équipement.

17. Utilisation du procédé de fabrication de pièce tubulaire (210) selon l'une quelconque des revendications 1 à 9 pour réaliser un arbre tubulaire composite (200) **caractérisée en ce que** l'on positionne des pièces rapportées (250) enfilées à faible jeu sur l'ébauche déformée (260) qui résulte de la deuxième étape dudit procédé, à des endroits déterminés de ladite ébauche déformée situés au droit d'une partie rainurée (232) du mandrin, de manière à ce que le gonflement créé par l'extraction du mandrin (230) lors de la troisième étape dudit procédé sertisse lesdites pièces rapportées (250) sur ladite pièce tubulaire (210).

18. Utilisation du procédé de fabrication de pièce tubulaire (210) selon la revendication 8 pour réaliser un arbre tubulaire composite (200) **caractérisée en ce que** :
- l'on positionne des pièces rapportées (250) enfilées à faible jeu sur l'ébauche déformée (260) qui résulte de la deuxième étape dudit procédé, à des endroits déterminés de ladite ébauche déformée situés au droit d'une partie rainurée (232) du mandrin, de manière à ce que le gonflement créé par l'extraction du mandrin (230) lors de la troisième étape dudit procédé sertisse lesdites pièces rapportées (250) sur ladite pièce tubulaire (210),
- la surface (251) du trou axial des pièces rapportées (250) est une surface cylindrique cannelée longitudinalement en creux,
- les creux de cannelures (252) sont disposés sur la surface (251) du trou axial des pièces rapportées (250) de manière à correspondre à chacune des rainures (233) du mandrin (230).

19. Utilisation du procédé de fabrication de pièce tubulaire (210) pour réaliser un arbre tubulaire composite (200) selon la revendication 18 **caractérisée en ce que** les rainures (233) sont disposées par groupe (234) de deux sur la périphérie du mandrin (230), l'espace (235) entre les deux rainures (233) d'un même groupe (234) étant relativement réduit.

20. Utilisation du procédé de fabrication de pièce tubulaire (10, 100) selon l'une quelconque des revendications 10 à 15 pour réaliser un arbre tubulaire composite **caractérisée en ce que** l'on emmanche sur les zones annulaires calibrées (12, 102) des pièces rapportées munies d'un trou axial de forme et dimensions conjuguées de celles desdites zones annulaires calibrées, la forme et les dimensions conjuguées dudit trou axial permettant de réaliser un emmanchement serrant entre ladite pièce tubulaire et lesdites pièces rapportées.

21. Pièce tubulaire (10, 100) en métal de forme cylindrique de révolution du genre présentant extérieurement au moins une zone annulaire (12, 102) coaxiale en relief formant siège pour emmancher de manière serrante au moins une pièce rapportée, la ou lesdites zones annulaires de siège (12, 102) se trouvant extérieurement en relief par rapport aux parties cylindriques courantes (11, 101) de ladite pièce tubulaire (10,100) ladite pièce tubulaire étant **caractérisée en ce que** la ou lesdits zones annulaires de siège (12, 102) possèdent un diamètre intérieur identique à celui desdites parties cylindriques courantes (11, 101).

22. Pièce tubulaire (10, 100) selon la revendication 21 **caractérisée en ce que** la surface des sièges (12, 102) n'est pas une surface de révolution.

23. Pièce tubulaire (10, 100) selon la revendication 22 **caractérisée en ce que** la surface des sièges (12, 102) est une surface cylindrique cannelée (19).

24. Pièce tubulaire (10, 100) selon l'une quelconque des revendications 21 à 23 **caractérisée en ce qu'**en aucun point des surfaces de siège (12, 102), l'épaisseur (e'3, e"3) n'est inférieure à celle (e3) des parties cylindriques courantes (11, 101) de la pièce tubulaire.

25. Pièce tubulaire (10, 100) selon l'une quelconque des revendications 21 à 24, **caractérisé en ce que** le métal la constituant possède une texture fibrée, les fibres métalliques voisines de la surface suivant la forme du relief autour des zones annulaires de siège (12, 102) sans être coupées.

26. Pièce tubulaire (10, 100) selon l'une quelconque des revendications 21 à 25, **caractérisée en ce que** les zones annulaires de siège (12, 102) se raccordent selon des zones (13, 13', 103, 103') à grand rayon de courbure aux parties cylindriques courantes (11, 101) de la pièce tubulaire (10, 100).

27. Pièce tubulaire (10, 100) selon l'une quelconque des revendications 21 à 26, **caractérisée en ce que** les sièges (12, 102) ont une dimension radiale qui augmente légèrement depuis une extrémité de la pièce tubulaire jusqu'à l'autre.

28. Pièce tubulaire (100) selon l'une quelconque des revendications 21 à 27, **caractérisée en ce qu'**elle est constituée de plusieurs gradins cylindriques (105, 101, 108, 107) extérieurs et/ou intérieurs dont le diamètre augmente d'une extrémité (105) de la pièce tubulaire (100) à l'autre (107).

29. Pièce tubulaire (100) selon la revendication 28 , **caractérisée en ce que** les gradins cylindriques intérieurs et/ou extérieurs (105, 101, 108, 107) se raccordent les uns aux autres par des zones de transition (106) progressives.

## Patentansprüche

1. Verfahren zur Herstellung eines rohrförmigen metallischen Bauteils (10, 100, 210) zylindrischer Form, das darin besteht, einen rohrförmigen, zylindrischen, drehsymmetrischen Rohling (20, 120) Arbeitsgängen der plastischen Verformung zu unterziehen, wobei das Herstellungsverfahren **dadurch gekennzeichnet ist, daß**
- in einem ersten Schritt in den Rohling (20, 210) ein Dorn (30, 130, 230) allgemein zylindrischer, drehsymmetrischer Form eingeführt wird, der ein geringes radiales Spiel in bezug auf den Innendurchmesser des Rohlings aufweist, wobei der Dorn nur über einen Bruchteil seiner Länge eine oder mehrere Rillen (32, 132, 233) aufweist, deren Achse eine in bezug auf die Achse des Dorns vorgegebene Ausrichtung hat,
- in einem zweiten Schritt das System aus Rohling und Dorn axial durch mindestens eine Ziehdüse (40, 140, 141, 142) mit kreisförmigem Querschnitt geführt wird, damit das Metall des Rohlings ringförmig zwischen dem Durchlaßquerschnitt der Ziehdüse und dem Dorn fließt und dabei die Rillen (32, 132, 233) des Dorns füllt, indem es sich dort reliefartig eindrückt (52, 152, 213), wobei der Dorn (30, 130, 230) in bezug auf das vordere Ende des Rohlings (20, 120) unbeweglich gehalten wird, wo die Verformung beginnt,
- in einem dritten Schritt der Dorn (30, 130, 230) axial aus dem verformten Rohling (50, 165, 260) derart herausgezogen wird, daß die nicht gerillten Bereiche (31, 131, 231) des Dorns, die den gerillten Bereichen axial benachbart sind, sich auf die Zonen (52, 152, 213) des verformten Rohlings schieben, die während des zweiten Schritts reliefartig eingedrückt wurden, wodurch eine Verdickung (62, 215) der Außenfläche des verformten Rohlings in Höhe dieser reliefartig eingedrückten Zonen erhalten wird.

2. Verfahren zur Herstellung eines rohrformigen Bauteils nach Anspruch 1, **dadurch gekennzeichnet, daß** zum Festsetzen des Dorns (30, 130, 230) in bezug auf das vordere Ende des Rohlings (20, 120) ein Rohling verwendet wird, an dem ein innerer Anschlag (A, B) ausgebildet wurde, indem das Metall (22, 122) des vorderen Endes zur Achse zurückgedrückt wird, und während des zweiten Schritts der Dorn (30, 130, 230) in axialer Anlage gegen diesen Anschlag (A, B) gehalten wird.

3. Verfahren zur Herstellung eines rohrförmigen Bauteils nach Anspruch 1 oder 2, **dadurch gekennzeichnet, daß** der Querschnitt der Rillen (32, 132, 233) des Dorns ein im wesentlichen trapezförmiges Profil hat.

4. Verfahren zur Herstellung eines rohrförmigen Bauteils (100) nach einem der Ansprüche 1 bis 3, **dadurch gekennzeichnet, daß**
- ein Rohling (120) verwendet wird, der außen eine Reihe von zylindrischen koaxialen Bereichen in Absätzen (123, 121, 125) aufweist, wobei die Bereiche geringeren Durchmessers (123) sich am vorderen Ende des Rohlings befinden,
- während des zweiten Schritts des Verfahrens mehrere Ziehdüsen (141, 140, 142) mit unterschiedlichen Durchmessern verwendet werden, die verschiedene Bereiche (105, 101, 107) des Rohlings (120) bearbeiten, wobei mindestens eine der Ziehdüsen (140) das Füllen (152) der Rillen (132) des Dorns durchführt.

5. Verfahren zur Herstellung eines rohrförmigen Bauteils (100) nach einem der Ansprüche 1 bis 3, **dadurch gekennzeichnet, daß** man verwendet:
- einen Rohling (120), der innen eine Reihe von zylindrischen koaxialen Bereichen in Absätzen (123, 121, 125) aufweist, wobei die Bereiche geringeren Durchmessers (123) sich am vorderen Ende des Rohlings befinden,
- einen Dorn (130) mit zylindrischen koaxialen Bereichen in Absätzen (134, 131, 136, 139), deren Durchmesser sich von seinem vorderen bis zu seinem hinteren Ende vergrößern, indem sie an den Rohling angepaßt sind, wobei die Rillen (132) sich auf einem oder mehreren der zylindrischen Bereiche des Dorns befinden.

6. Verfahren zur Herstellung eines rohrförmigen Bauteils (100) nach den Ansprüchen 4 und 5 in Kombination, **dadurch gekennzeichnet, daß**
- auf dem Rohling (120) die äußeren zylindrischen Absätze so angeordnet sind, daß sie den inneren zylindrischen Absätzen entsprechen,
- der Arbeitsbereich der Ziehdüsen (141, 140, 142) so angepaßt ist, daß er auf dem rohrförmigen Bauteil (100) zylindrische äußere Absätze (105, 101, 107, 108) erzeugt, die den inneren zylindrischen Absätzen entsprechen.

7. Verfahren zur Herstellung eines rohrförmigen Bauteils (10, 100, 210) nach einem der Ansprüche 1 bis 6, **dadurch gekennzeichnet, daß** der zweite Schritt des Verfahrens durch Kaltfließpressen erfolgt.

8. Verfahren zur Herstellung eines rohrförmigen Bauteils (210) nach einem der Ansprüche 1 bis 7, **dadurch gekennzeichnet, daß** die Rillen (233) des Dorns (230) in Längsrichtung auf diesem angeordnet sind.

9. Verfahren zur Herstellung eines rohrförmigen Bauteils (10, 100) nach einem der Ansprüche 1 bis 7, **dadurch gekennzeichnet, daß** der Dorn (30, 130) eine oder mehrere ringförmige Rillen (32, 132) aufweist, um nach dem dritten Schritt des Verfahrens ein verdicktes rohrförmiges Bauteil (60) zu erhalten, das außen eine oder mehrere reliefartig vorstehende, ringförmige Zonen (62) aufweist.

10. Verfahren zur Herstellung eines rohrförmigen Bauteils (10, 100) nach Anspruch 9, **dadurch gekennzeichnet, daß** ein komplementärer Schritt des Kaltkalibrierens der Außenfiäche der ringförmigen, reliefartig vorstehenden Zonen (62) durch Durchlauf durch mindestens eine Ziehdüse (41) durchgeführt wird, deren Durchlaßquerschnitt angepaßt ist.

11. Verfahren zur Herstellung eines rohrförmigen Bauteils (10, 100) nach Anspruch 10, **dadurch gekennzeichnet, daß** die Kalibrierung der Außenfläche der ringförmigen, reliefartig vorstehenden Zonen (62) auf einem Dorn (38) durchgeführt wird, der in das Verdickungen aufweisende rohrförmige Bauteil (60) eingeführt wird und in bezug auf dieses Bauteil ein geringes radiales Spiel aufweist.

12. Verfahren zur Herstellung eines rohrförmigen Bauteils (10, 100) nach Anspruch 10 oder 11, **dadurch gekennzeichnet, daß** dem Durchlaßquerschnitt der Kalibrier-Ziehdüse (41) eine nicht-kreisförmige Form verliehen wird.

13. Verfahren zur Herstellung eines rohrförmigen Bauteils (10, 100) nach Anspruch 12, **dadurch gekennzeichnet, daß** die Kalibrier-Ziehdüse (41) es ermöglicht, auf der Oberfläche der reliefartig vorstehenden ringförmigen Zonen des rohrförmigen Bauteils (10, 100) zylindrische geriefte Oberflächen (12) herzustellen.

14. Verfahren zur Herstellung eines rohrförmigen Bauteils (10) nach einem der Ansprüche 10 bis 13, **dadurch gekennzeichnet, daß** mehrere Kalibrier-Ziehdüsen (41) mit Durchlaßquerschnitten verwendet werden, die angepaßt sind, um kalibrierte ringförmige Zonen (12) zu erzeugen, deren radiale Abmessung vom vorderen Ende des rohrförmigen Bauteils (10) bis zum hinteren Ende zunimmt.

15. Verfahren zur Herstellung eines rohrförmigen Bauteils (10) nach Anspruch 14, **dadurch gekennzeichnet, daß** die ringförmigen Rillen (32) des Dorns (30) eine Tiefe aufweisen, die zwischen denen am vorderen Ende und denen am hinteren Ende des Dorns zunimmt.

16. Verfahren zur Herstellung eines rohrförmigen Bauteils nach einem der Ansprüche 1 bis 15, **dadurch gekennzeichnet, daß** das rohrförmige Bauteil (10, 100, 210) in einem Satz von Durchgängen der plastischen Verformung in Vorwärts- und Rückwärtsbewegung in einer einzigen Einrichtung erhalten wird.

17. Verwendung des Verfahrens zur Herstellung eines rohrförmigen Bauteils (210) nach einem der Ansprüche 1 bis 9 zur Gestaltung einer rohrförmigen Verbundwelle (200), **dadurch gekennzeichnet, daß** angesetzte Bauteile (250), die mit geringem Spiel auf den verformten Rohling (260) aufgeschoben sind, der aus dem zweiten Schritt des Verfahrens entsteht, an vorbestimmten Stellen des verformten Rohlings positioniert werden, die sich vor einem gerillten Bereich (232) des Dorns befinden, damit die durch das Herausziehen des Dorns (230) beim dritten Schritt des Verfahrens erzeugte Verdickung die angesetzten Bauteile (250) auf das rohrförmige Bauteil (210) aufquetscht.

18. Verwendung des Verfahrens zur Herstellung eines rohrförmigen Bauteils (210) nach Anspruch 8 zur Gestaltung einer rohrförmigen Verbundwelle (200), **dadurch gekennzeichnet, daß**:
- angesetzte Bauteile (250), die mit geringem Spiel auf den verformten Rohling (260) aufgeschoben sind, der aus dem zweiten Schritt des Verfahrens entsteht, an vorbestimmten Stellen des verformten Rohlings positioniert werden, die sich vor einem gerillten Bereich (232) des Dorns befinden, damit die vom Herausziehen des Dorns (230) beim dritten Schritt des Verfahrens erzeugte Verdickung die angesetzten Bauteile (250) auf das rohrförmige Bauteil (210) aufquetscht,
- die Oberfläche (251) des axialen Lochs der angesetzten Bauteile (250) eine zylindrische Oberfläche ist, die in Längsrichtung vertiefte Riefen aufweist,
- die Vertiefungen der Riefen (252) an der Oberfläche (251) des axialen Lochs der angesetzten Bauteile (250) so angeordnet sind, daß sie je einer der Rillen (233) des Dorns (230) entsprechen.

19. Verwendung des Verfahrens zur Herstellung eines rohrförmigen Bauteils (210), um eine rohrförmige Verbundwelle (200) nach Anspruch 18 zu gestalten, **dadurch gekennzeichnet, daß** die Rillen (233) in paarweisen Gruppen (234) auf dem Umfang des Dorns (230) angeordnet sind, wobei der Zwischenraum (235) zwischen den beiden Rillen (233) einer Gruppe (234) relativ klein ist.

20. Verwendung des Verfahrens zur Herstellung eines rohrförmigen Bauteils (10, 100) nach einem der Ansprüche 10 bis 15, um eine rohrförmige Verbundwelle zu gestalten, **dadurch gekennzeichnet, daß** auf die kalibrierten ringförmigen Zonen (12, 102) angesetzte Bauteile mit einem axialen Loch aufgeschoben werden, dessen Form und Abmessungen denen der kalibrierten ringförmigen Zonen zugeordnet sind, wobei die zugeordnete Form und die zugeordneten Abmessungen des axialen Lochs es ermöglichen, eine klemmende Paßverbindung zwischen dem rohrförmigen Bauteil und den angesetzten Bauteilen herzustellen.

21. Rohrförmiges metallisches Bauteil (10, 100) zylindrischer, drehsymmetrischer Form von der Art, das außen mindestens eine ringförmige, koaxiale, reliefartig vorstehende Zone (12, 102) aufweist, die einen Sitz bildet, um mindestens ein angesetztes Bauteil klemmend einzupassen, wobei die ringförmige(n) Sitzzone(n) (12, 102) außen in bezug auf die laufenden zylindrischen Bereiche (11, 101) des rohrförmigen Teils (10, 100) reliefartig vorstehen, wobei das rohrförmige Bauteil **dadurch gekennzeichnet ist, daß** die ringförmige(n) Sitzzone(n) (12, 102) einen Innendurchmesser aufweist (aufweisen), der gleich dem der laufenden zylindrischen Bereiche (11, 101) ist.

22. Rohrförmiges Bauteil (10, 100) nach Anspruch 21, **dadurch gekennzeichnet, daß** die Oberfläche der Sitze (12, 102) keine drehsymmetrische Fläche ist.

23. Rohrförmiges Bauteil (10, 100) nach Anspruch 22, **dadurch gekennzeichnet, daß** die Oberfläche der Sitze (12, 102) eine zylindrische, mit Riefen versehene Oberfläche (19) ist.

24. Rohrförmiges Bauteil (10, 100) nach einem der Ansprüche 21 bis 23, **dadurch gekennzeichnet, daß** die Stärke (e'3, e"3) an keinem Punkt der Sitzoberflächen (12, 102) geringer ist als die Stärke (e3) der laufenden zylindrischen Bereiche (11, 101) des rohrförmigen Bauteils.

25. Rohrförmiges Bauteil (10, 100) nach einem der Ansprüche 21 bis 24, **dadurch gekennzeichnet, daß** das es bildende Metall eine gefaserte Struktur aufweist, wobei die der Oberfläche benachbarten Metallfasern der Reliefform um die ringförmigen Sitzzonen (12, 102) folgen, ohne zerschnitten zu werden.

26. Rohrförmiges Bauteil (10, 100) nach einem der Ansprüche 21 bis 25, **dadurch gekennzeichnet, daß** die ringförmigen Sitzzonen (12, 102) sich gemäß Zonen (13, 13', 103, 103') mit großem Krümmungsradius an die laufenden zylindrischen Bereiche (11, 101) des rohrförmigen Bauteils (10, 100) anschließen.

27. Rohrförmiges Bauteil (10, 100) nach einem der Ansprüche 21 bis 26, **dadurch gekennzeichnet, daß** die Sitze (12, 102) eine radiale Abmessung aufweisen, die von einem Ende des rohrförmigen Bauteils bis zum anderen leicht zunimmt.

28. Rohrförmiges Bauteil (100) nach einem der Ansprüche 21 bis 27, **dadurch gekennzeichnet, daß** es aus mehreren äußeren und/oder inneren zylindrischen Absätzen (105, 101, 108, 107) besteht, deren Durchmesser von einem Ende (105) des rohrförmigen Bauteils (100) zum anderen (107) zunimmt.

29. Rohrförmiges Bauteil (100) nach Anspruch 28, **dadurch gekennzeichnet, daß** die inneren und/oder äußeren zylindrischen Absätze (105, 101, 108, 107) sich durch progressive Übergangszonen (106) aneinander anschließen.

## Claims

1. A method of manufacturing a tubular metal part (10, 100, 210) with a cylindrical shape, consisting of subjecting a cylindrical tubular blank (20, 120) generated by revolution to plastic deformation operations, said manufacturing method being **characterized in that**:
• in a first step, a mandrel (30, 130, 230) with a generally cylindrical shape generated by revolution and with a small radial play with respect to the internal diameter of the blank is inserted into said blank (20, 120), said mandrel comprising, over only a fraction of its length, one or more grooves (32, 132, 233) the axis of which has a given orientation with respect to the axis of the mandrel;
• in a second step, the blank-mandrel assembly is passed axially through at least one die (40, 140, 141, 142) with a circular cross-section such that the metal of said blank flows annularly between the cross section of flow of the die and the mandrel, filling the grooves (32, 132, 233) of said mandrel and forming therein an embossed imprint (52, 152, 213), said mandrel (30, 130, 230) being held immobile with respect to the front end of the blank (20, 120) where deformation commences;
• in a third step, the mandrel (30, 130, 230) is axially withdrawn from the deformed blank (50, 165, 260) such that the portions without grooves (31, 131, 231) of the mandrel axially adjacent to the grooved portions ride over the zones (52, 152, 213) that have been embossed during the second step, producing a bulge (62, 215) in the external surface of said deformed blank at the level of said imprinted zones.

2. A method of manufacturing a tubular part according to claim 1, **characterized in that**, in order to immobilise the mandrel (30, 130, 230) with respect to the front end of the blank (20, 120), a blank is used on which an internal abutment has been formed (A, B) by upsetting the metal (22, 122) of said front end towards the axis, and during the second step, the mandrel (30, 130, 230) bears axially against said abutment (A, B).

3. A method of manufacturing a tubular part according to claim 1 or claim 2, **characterized in that** the profile of the cross section of the grooves (32, 132, 233) of the mandrel is substantially trapezoidal.

4. A method of manufacturing a tubular part (100) according to any one of claims 1 to 3, **characterized in that**:
• a blank (120) is used comprising an external series of coaxial cylindrical stepped portions (123, 121, 125), the portions with the smallest diameter (123) being located at the front of the blank;
• during the second step of said method, a plurality of dies (141, 140, 142) with different diameters are used on different portions (105, 101, 107) of the blank (120), 'at least one of the dies (140) filling (152) the grooves (132) of the mandrel.

5. A method of manufacturing a tubular part (100) according to any one of claims 1 to 3, **characterized in that** the following are used:
• a blank (120) comprising an internal series of coaxial cylindrical stepped portions (123, 121, 125), the portions with the smallest diameter (123) being located at the front of the blank;
• a mandrel (130) with coaxial cylindrical stepped portions (134, 131, 136, 139) the diameters of which increase from its front end to its rear end and which are adapted to the blank, the grooves (132) being disposed on one or more of the cylindrical portions of said mandrel.

6. A method of manufacturing a tubular part (100) according to claim 4 and claim 5 taken together, **characterized in that**:
• on the blank (120), the external cylindrical steps are positioned to correspond to the internal cylindrical steps ;
• the working zone of the dies (141, 140, 142) is adapted to generate external cylindrical steps (105, 101, 107, 108) corresponding to the internal cylindrical steps on the tubular part (100).

7. A method of manufacturing a tubular part (10, 100, 210) according to any one of claims 1 to 6, **characterized in that** the second step of said method is carried out by cold extrusion.

8. A method of manufacturing a tubular part (210) according to any one of claims 1 to 7, **characterized in that** the grooves (233) of the mandrel (230) are disposed longitudinally thereon.

9. A method of manufacturing a tubular part (10, 100) according to any one of claims 1 to 7, **characterized in that** the mandrel (30, 130) comprises one or more annular grooves (32, 132) to produce, after the third step of the method, a bulged tubular part (60) with one or more external annular embossed zones (62).

10. A method of manufacturing a tubular part (10, 100) according to claim 9, **characterized in that** a complementary cold finishing step is carried out on the external surface of the annular embossed zones (62) by passage through at least one die (41) with a suitable cross section of flow.

11. A method of manufacturing a tubular part (10, 100) according to claim 10, **characterized in that** finishing of the external surface of the annular embossed zones (62) is carried out on a mandrel (38) inserted into the bulged tubular part (60) and having a small radial play with respect thereto.

12. A method of manufacturing a tubular part (10, 100) according to claim 10 or claim 11, **characterized in that** the finishing die (41) is endowed with a non-circular cross section of flow.

13. A method of manufacturing a tubular part (10, 100) according to claim 12, **characterized in that** the finishing die (41) can produce fluted cylindrical surfaces (12) on the surface of the annular embossed zones of the tubular part (10, 100).

14. A method of manufacturing a tubular part (10) according to any one of claims 10 to 13, **characterized in that** a plurality of finishing dies (41) with cross sections of flow suitable for generating sized annular zones (12) are used, the radial dimensions of which increase from the front end of the tubular part (10) to the rear end.

15. A method of manufacturing a tubular part (10) according to claim 14, **characterized in that** the depth of the annular grooves (32) of the mandrel (30) increases from those formed at the front end to those at the rear end of said mandrel.

16. A method of manufacturing a tubular part according to any one of claims 1 to 15, **characterized in that** the tubular part (10, 100, 210) is produced in a single set of reciprocating plastic deformation passes using a single set of equipment.

17. Use of a method of manufacturing a tubular part (210) according to any one of claims 1 to 9 for manufacturing a composite tubular shaft (200), **characterized in that** parts to be attached (250) are slipped into position with a small play onto the deformed blank (260) resulting from the second step of said method, into predetermined locations on said deformed blank situated in correspondance with a grooved portion (232) of the mandrel, such that the bulge created by withdrawing the mandrel (230) during the third step of said method crimps said parts to be attached (250) onto said tubular part (210).

18. Use of a method of manufacturing a tubular part (210) according to claim 8 for manufacturing a composite tubular shaft (200), **characterized in that**:
• the parts to be attached (250) are slipped into position with a small play onto the deformed blank (260) resulting from the second step of said method into predetermined locations on said deformed blank situated in correspondance with a grooved portion (232) of the mandrel, such that the bulge created by withdrawing the mandrel (230) during the third step of said method crimps parts to be attached (250) onto said tubular part (210);
• the surface (251) of the axial hole of the parts to be attached (250) is a cylindrical surface with longitudinal hollowed splines ;
• the hollows of the splines are disposed on the surface (251) of the axial hole of the parts to be attached (250) so as to correspond with each of the grooves (233) of the mandrel (230).

19. Use of a method of manufacturing a tubular part (210) for the production of a composite tubular shaft (200) according to claim 18, **characterized in that** the grooves (233) are disposed in groups of two (234) on the periphery of the mandrel (230), the space (235) between the two grooves (233) of a group (234) being relatively small.

20. Use of a method of manufacturing a tubular part (10, 100) according to any one of claims 10 to 15 for the production of a composite tubular shaft, **characterized in that** parts to be attached provided with an axial hole with a shape and dimensions that match those of said finished annular zones press fitted onto the finished annular zones (12, 102), the matching shape and dimensions of said axial hole producing a tight press fit between said tubular part and said parts to be attached.

21. A metal tubular part (10, 100) with a cylindrical shape generated by revolution of the type provided externally with at least one annular embossed coaxial zone (12, 102) forming a seat for tight press fitting at least one part to be attached, said annular seat zone or zones (12, 102) being embossed externally with respect to the current cylindrical portions (11, 101) of said tubular portion (10, 100) said tubular part being **characterized in that** the internal diameter of said annular seat zone or zones (12, 102) is identical to that of said current cylindrical portions (11, 101).

22. A tubular part (10, 100) according to claim 21, **characterized in that** the surface of the seats (12, 102) is not a surface of revolution.

23. A tubular part (10, 100) according to claim 22, **characterized in that** the surface of the seats (12, 102) is a fluted cylindrical surface (19).

24. A tubular part (10, 100) according to any one of claims 21 to 23, **characterized in that** no point of the seat surfaces (12, 102) has a thickness (e'3, e"3) that is less than that (e3) of the current cylindrical portions (11, 101) of the tubular part.

25. A tubular part (10, 100) according to any one of claims 21 to 24, **characterized in that** the metal constituting it has a fibrous texture, the metal fibres close to the surface following the shape of the embossed area around the annular zones of the seat (12, 102) without being cut.

26. A tubular part (10, 100) according to any one of claims 21 to 25, **characterized in that** the annular seat zones (12, 102) are connected by zones (13, 13', 103, 103') with a large radius of curvature to the current cylindrical portions (11, 101) of the tubular part (10, 100).

27. A tubular part (10, 100) according to any one of claims 21 to 26, **characterized in that** the seats (12, 102) have a radial dimension that increases slightly from one end of the tubular part to the other end.

28. A tubular part (10, 100) according to any one of claims 21 to 27, **characterized in that** it is constituted by a plurality of external and/or internal cylindrical steps (105, 101, 108, 107) the diameter of which increases from one end of the tubular part (100) to the other end (107).

29. A tubular part (10, 100) according to claim 28, **characterized in that** the internal and/or external cylindrical steps (105, 101, 108, 107) are connected to each other via progressive transition zones (106).
